# EUROPÄISCHE PATENTSCHRIFT

(11) **EP 1 328 426 B1**
(45) Veröffentlichungstag und Bekanntmachung des Hinweises auf die Patenterteilung: **16.06.2004**
(21) Anmeldenummer: 01978122.8
(22) Anmeldetag: 12.09.2001
(51) Int. Cl.: B60T 8/00, B60T 17/22

(54) **VERFAHREN UND VORRICHTUNG ZUM ERKENNEN EINER SCHADHAFTEN BREMSSCHEIBE UND VORRICHTUNG ZUR STEUERUNG EINER RADBREMSE**
METHOD AND DEVICE FOR DETECTING A DEFECTIVE BRAKE DISK, AND DEVICE FOR CONTROLLING A WHEEL BRAKE
PROCEDE ET DISPOSITIF D'IDENTIFICATION D'UN DISQUE DE FREIN DEFECTUEUX ET DISPOSITIF POUR COMMANDER UN FREIN DE ROUE

(30) Priorität: 19.10.2000 DE 10051783
(43) Veröffentlichungstag der Anmeldung: 23.07.2003
(73) Patentinhaber: ROBERT BOSCH GMBH, 70442 Stuttgart (DE)
(72) Erfinder: SCHUBERT, Michael, 75382 Althengstett (DE)
(86) Internationale Anmeldenummer: PCT/DE2001/003496
(87) Internationale Veröffentlichungsnummer: WO 2002/032731

(56) Entgegenhaltungen:
- EP-A- 1 157 908
- DE-A- 19 804 676
- PATENT ABSTRACTS OF JAPAN vol. 2000, no. 13, 5. Februar 2001 (2001-02-05) & JP 2000 283193 A (AKEBONO BRAKE IND CO LTD), 13. Oktober 2000 (2000-10-13)
- PATENT ABSTRACTS OF JAPAN vol. 2000, no. 06, 22. September 2000 (2000-09-22) & JP 2000 085554 A (AKEBONO BRAKE IND CO LTD), 28. März 2000 (2000-03-28)

## Beschreibung

### Stand der Technik

Die Erfindung betrifft ein Verfahren und eine Vorrichtung zum Erkennen einer schadhaften Bremsscheibe sowie eine Vorrichtung zur Steuerung einer Radbremse welche die Information über eine schadhafte Bremsscheibe auswertet.

In der DE-A 197 07 960 (US-Patent 6 030 055) wird eine mit Fremdkraft arbeitende hydraulische Fahrzeugbremsanlage beschrieben, welche einen Druckregler für den Druck in wenigstens einer Radbremse aufweist Der Druck wird dabei über wenigstens ein Ventil beeinflußt, wobei zur Ansteuerung des Ventils ein Ansteuersignal ausgegeben wird, welches auf der Basis der Ventilkennlinie für den Druckaufbau bzw. für den Druckabbau gebildet wird. Durch einen Vergleich der Reaktion der gemessenen Ist-Drücke auf die vom Druckregler ausgegebene Ventilansteuerung wird eine Adaption dieser wenigstens einen Kennlinie abgeleitet.

Aus der JP 2000 283193 A ist eine Radbremse bekannt, bei der Mittel vorgesehen sind, die eine Fluktuation der Bremskraft erfassen. Zum Ausgleich dieser Fluktuationen ist eine Steuerung vorgesehen, die eine zur Fluktuation gegenphasige Ansteuerung der Radbremse ermöglicht.

In der EP 0 486 281 A1 ist ein elektrisches Bremssystem beschrieben, welches eine falsch anliegende Bremsscheibe erkennt. Da eine falsch anliegende Bremsscheibe zu einer ungleichmäßigen Bremsleistung und somit zu einem Verziehen des Fahrzeugs während der Fahrt führen kann, wird die Steuerung wenigstens der einen Radbremse abgeschalten, an der die falsch anliegende Bremsscheibe erkannt wird.

Schadhafte Bremsscheiben, die beispielsweise infolge eines Fertigungsformfehlers oder nach thermischer Überlastung zu Schaden gekommen sind, fuhren zu Schwingungen des Bremsdrucks, die den vom Druckregler modulierten Bremsdruck überlagern. Dadurch werden Druckänderungen gemessen, die nicht durch eine Ventilbetätigung hervorgerufen werden, was zu Fehladaptionen der Kennlinie führen kann.

Im Übrigen beeinträchtigt eine schadhafte Bremsscheibe auch die Bremswirkung der Bremsanlage, so dass die Information des Fahrers über diesen Fehlerzustand bzw. die Einschränkung der Verfügbarkeit des Fahrzeugs von Vorteil ist.

### Vorteile der Erfindung

Durch die Auswertung der Änderungen des Bremsdrucks bzw. der Bremskraft im stationären und/oder im dynamischen Bremsvorgang wird die Erkennung schadhafter Bremsscheiben ermöglicht.

Damit ist es in vorteilhafter Weise möglich, den Fahrer in Kenntnis von einem derartigen Fehlverhalten zu setzen, gegebenenfalls die Verfügbarkeit des Fahrzeugs bis zum Austausch der Bremsscheibe einzuschränken und/oder eine wie oben beschriebene Fehladaption der Kennlinie eines Bremsdruckreglers zu vermeiden.

Besonders vorteilhaft ist, dass die Erkennung zu einem Diagnöseeintrag als Hinweis für die Werkstatt beim nächsten Kundendienst führt bzw. die verbleibende Fahrstrecke bzw. Betriebszeit bis zum nächsten Wartungstermin verkürzt wird.

In vorteilhafter Weise ist das Erkennen einer schadhaften Bremsscheibe dadurch besonders genau und zuverlässig, dass ein schwingender Verlauf des Bremsdrucks bzw. der Bremskraft, der typischerweise bei einer defekten Bremsscheibe entsteht erkannt wird. Dies wird vorteilhaft durch Vergleich des Gradienten des Bremsdrucks bzw. der Bremskraft mit vorgegebenen Schwellenwerten erreicht: Dabei wird das Überschreiten des Schwellenwertes durch den Gradient gezählt bzw. in einem vorteilhaften Ausführungsbeispiel die Periodizität der Schwingung im stationären Bremszustand durch aufeinanderfolgende positive und negative Gradienten ermittelt.

Die Erkennung einer schadhaften Bremsscheibe ist jedoch nicht auf den stationären Bremsvorgang beschränkt, sondern sie wird vorteilhaft auch in dynamischen Zuständen angewendet, so dass die Erkennungszeit deutlich reduziert werden kann. Besonders günstige (genaue und zuverlässige) Ergebnisse ergeben sich (auch wenn die Erkennung als Alternative zum stationären Zustand eingesetzt wird) in Betriebssituationen mit einem langsamen Bremskraft- bzw. -druckaufbau oder -abbau. Bleibt der Aufbau- bzw. Abbaugradient unter einem Schwellenwert (langsamer Aufbau bzw. langsamer Abbau) wird auf eine schadhafte Bremsscheibe erkannt, wenn ein negativer Gradientengrenzwert (für den Aufbau) bzw. ein positiver Gradientengrenzwert (für den Abbau) mehrmals überschritten wurde.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Figur 1 zeigt am Beispiel einer Radbremse den Aufbau einer elektrisch gesteuerten Bremsanlage, während in Figur 2 am Beispiel eines Flussdiagramms eine bevorzugte Vorgehensweise zur Erkennung schadhafter Bremsscheiben dargestellt ist. Das Flussdiagramm skizziert dabei ein Programm, welches in der Rechnereinheit der Steuereinheit zur Steuerung der Radbremse implementiert ist. Die Wirkungsweise der Erkennung schadhafter Bremsscheiben wird anhand der Zeitdiagramme der Figur 3 näher verdeutlicht. In Figur 4 ist ein Zeitdiagramm dargestellt, in welchen ein Ausführungsbeispiel für die Erkennung einer schadhaften Bremsscheibe in einem dynamischen und einem stationären Betriebszustand erläutert ist.

### Beschreibung von Ausführungsbeispielen

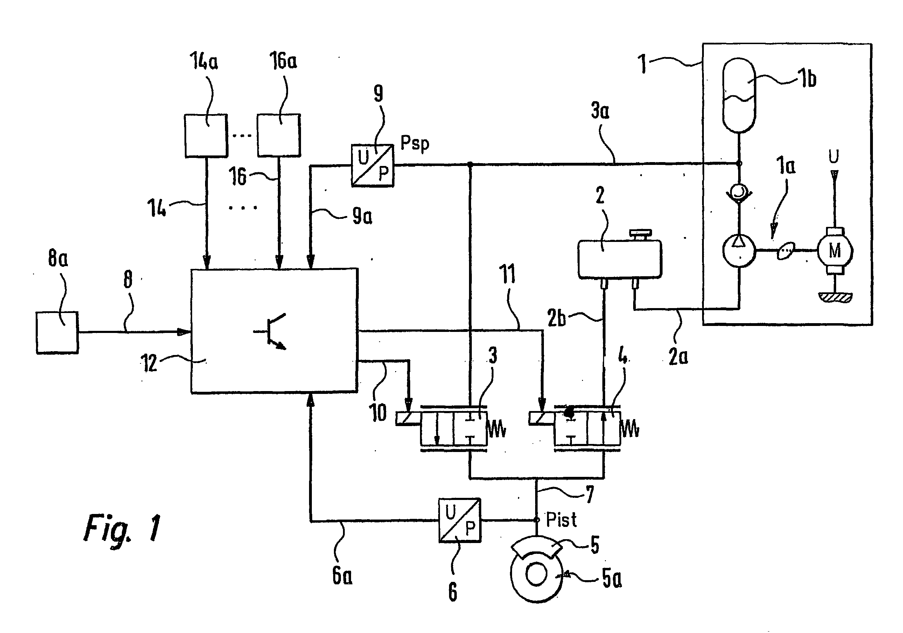

In Figur 1 ist am Beispiel einer einzelnen Radbremse ein Steuersystem für die Bremsanlage eines Fahrzeugs skizziert. Dieses umfaßt eine herkömmliche Druckversorgung 1, die beispielsweise aus einer Elektrohydraulikpumpe 1a und einem Gasdruckkolbenspeicher 1b bestehen kann. Ferner ist ein Flüssigkeitsreservoir 2 vorgesehen, welches die Druckversorgung 1 speist und die Flüssigkeit beim Druckabbau an der Radbremse aufnimmt. Zu diesem Zweck verbindet eine Leitung 2a das Reservoir 2 mit dem saugseitigen Eingang der Pumpe 1a, während eine zweite Leitung 2b vom Reservoir 2 zu der Ventilanordnung zur Steuerung des Bremsdrucks in der Radbremse führt. Die Bremszange 5 des Rades 5a ist über eine Druckleitung 7 mit der Ventilanordnung zur Steuerung des Bremsdrucks in dem Radbremszylinder verbunden. Die Ventilanordnung besteht in einem bevorzugten Ausführungsbeispiel aus zwei Magnetsitzventilen 3 für den Druckaufbau und 4 für den Druckabbau. Das Magnetsitzventil 3 für den Druckaufbau ist in der unbestromten Stellung geschlossen, das Ventil 4 für den Druckabbau geöffnet oder geschlossen. Über die Leitung 2b ist das ventil 4 mit dem Flüssigkeitsreservoir 2 verbunden, während das Ventil 3 über eine Leitung 3a mit der Druckversorgung 1, dort mit der Förderleitung der Pumpe 1a, verbunden ist. Zur Erfassung des Bremsdrucks in der Bremszange 5 des Rades 5a ist ein Drucksensor 6 vorgesehen, der den Druck in der Leitung 7 bzw. den Druck im Radbremszylinder, den Ist-Druck Pist erfaßt und ein entsprechendes elektrisches Signal über die Leitung 6a zur Steuereinheit 12 führt. Entsprechend wird durch einen Drucksensor 9 der Druck in der Bremsleitung 3a, der sogenannte Speicherdruck PSP, erfaßt und ein entsprechendes elektrisches Signal über die Leitung 9a zur Steuereinheit 12 geführt. Die Steuereinheit 12, die unter anderem einen Druckregler enthält, steuert über die Ausgangsleitungen 10 und 11 die Magnetventile 3 und 4 zur Regelung des Bremsdrucks in der Bremszange 5 an. Von einer Meßeinrichtung 8a zur Erfassung des Fahrer-Bremswunsches, beispielsweise von einem mit dem Bremspedal verbundenen Weg-, Kraft- und/oder Drucksensor, wird wenigstens ein der Bremspedalbetätigung entsprechendes elektrisches Signal über die Leitung 8 der Steuereinheit 12 zugeführt. Ferner werden der Steuereinheit 12 Eingangsleitungen 14 bis 16 von Meßeinrichtungen 14a bis 16a zugeführt, die Betriebsgrößen des Kraftfahrzeugs erfassen, welche im Rahmen der Bremsensteuerung ausgewertet werden. Derartige Betriebsgrößen sind beispielsweise die Raddrehzahlen, die Achslasten, etc. Diese Signale werden im Rahmen von herkömmlichen Antiblockierregelungen, Antriebsschlupfregelungen, Fahrdynamikregelungen, achslastabhängigen Regelungen, etc. verwendet.

Die Steuereinheit 12 erfaßt über die Leitung 8 ein Maß für die Bremspedalbetätigung, die sie gegebenenfalls unter Berücksichtigung weiterer Betriebsgrößen, die über die Leitungen 14 bis 16 zugeführt werden, durch Auswerten von Kennlinien, Kennfeldern, Tabellen oder Berechnungsschritte in einem vom Fahrer gewünschten, unter den herrschenden Betriebsbedingungen einzustellenden Solldruck Psoll umsetzt. Dieser Solldruck kann dabei für jede Radbremse radindividuell oder für die Bremsen einer Achse bestimmt werden. Der Solldruck wird dann für wenigstens eine Radbremse mit dem von der Meßeinrichtung 6 erfaßten Ist-Druck in der Radbremszangeverglichen und abhängig von der Differenz im Rahmen der nachfolgend beschriebenen Druckregelung durch Ansteuern wenigstens eines der Magnetventile 3 oder 4 eingestellt. Ein derartiger Druckregelkreis ist für jede elektrisch steuerbare Radbremse des Fahrzeugs vorgesehen. Im bevorzugten Ausführungsbeispiel sind die von der Steuereinheit 12 über die Leitung 10 und 11 ausgesandten Ansteuersignale pulsweitenmodulierte Signale, die zu einem mittleren Erregerstrom und damit zu einer Kraftbeaufschlagung führen, die das angesteuerte Ventil in die erforderliche Zwischenstellung führt.

Im bevorzugten Ausführungsbeispiel nach Figur 1 ist die Magnetventilanordnung mit 2/2-Wegeventilen ausgeführt, welche auch bei herkömmlichen ABS-Systemen Verwendung finden. Darüber hinaus wird in anderen Ausführungsbeispielen ein Ventil mit zwei Sitzen, einem Anker und einem elektrischen Anschluß anstelle der beiden Ventile 3 und 4 eingesetzt. Ferner kann neben der direkten Erfassung des Bremsdrucks mittels des Drucksensors 6 in einem anderen Ausführungsbeispiel die Druckwirkung durch Erfassen der Bremskraft aus Verbiegungen an Elementen der Bremszange oder deren Befestigung abgeleitet werden oder über ein Modell über die Größe und Dauer der Ansteuerung der Ventile ermittelt werden.

Neben der oben dargestellten Verwendung von geschalteten Stromtreibern, die die Ventilanordnung mit pulsweitenmodulierten Signalen ansteuern, werden in einem anderen Ausführungsbeispiel geregelte Stromtreiber eingesetzt, bei welchen im Rahmen eines Regelkreises der vom Druckregler ermittelte Strom als Sollwert mit einem an der Ventilanordnung erfaßten Iststrom durch die Spule des angesteuerten Magnetventils verglichen und entsprechend eingeregelt wird.

Die nachfolgend beschriebene Vorgehensweise zur Erkennung schadhafter Bremsscheiben wird im bevorzugten Ausführungsbeispiel bei einer wie oben dargestellten Radbremsensteuerung eingesetzt. Auf eine entsprechende Weise lassen sich jedoch schadhafte Bremsscheiben auch bei anderen elektrisch gesteuerten Bremsanlagen erkennen, beispielsweise bei elektropneumatischen Radbremsen oder bei Radbremsen mit elektromotorischer Zuspannung. Insbesondere bei letzterem ergibt sich ebenfalls ein periodisch schwankender Bremskraftverlauf (Zuspannkraft), wenn die Bremsscheibe schadhaft ist. Wie nachfolgend anhand des Bremsdrucksignals beschrieben wird auch dieses Bremskraftsignal bei elektromotorischen Radbremsen und/oder bei elektrohydraulischen oder elektropneumatischen Radbremsen mit Bremskraftsensierung der Gradient des Bremskraftsignals zur Erkennung schadhafter Bremsscheiben ausgewertet. Entsprechendes gilt auch für konventionelle, d.h. nicht elektrisch gesteuerte Radbremsen, bei den ein entsprechendes Signal zur Verfügung steht.

Voraussetzung, um Bremsdruck- oder Bremskraftschwingungen, die durch defekte Bremsscheiben hervorgerufen werden, zu erkennen, ist, dass keine Druck- bzw. Bremskraftschwingungen durch Ventilbetätigungen oder Stellerbetätigungen auftreten. Die Erkennung schadhafter Bremsscheiben wird in einem ersten Ausführungsbeispiel erst dann durchgeführt, wenn ein stationärer Bremsvorgang vorliegt. Dies ist bevorzugt dann der Fall, wenn nach großen Änderungsgradienten des Bremsdrucks bzw. der Bremskraft eine vorgegebene Zeit vergangen ist. So wird im diesem Ausführungsbeispiel die Bremsscheibenerkennung dann zugelassen, wenn ein bestimmter Änderungsgradient des Bremsdrucks und/oder der Bremskraft überschritten ist und nach Abflachen des Gradienten eine vorgegebene Verriegelungszeit abgelaufen ist. In einem zweiten Ausführungsbeispiel wird eine schadhafte Bremsscheibe auch in dynamischen Betriebszuständen bei langsamem Auf- und/oder Abbau der Bremskraft (Bremsdruck). Hier findet die Erkennung dann statt, wenn bei einem Aufbau und/oder bei einem Abbau ein vorgegebener Gradient nicht überschritten wird bzw. wenn der vorgegebene Gradient überschritten ist und nach Unterschreiten eine vorgegebene Verriegelungszeit abgelaufen ist. In einem dritten Ausführungsbeispiel erfolgt die Erkennung sowohl im stationären als auch im dynamischen Bremszustand.

Alternativ oder ergänzend zur obigen Erkennung eines stationären Bremszustands ist ein solcher bei einer elektrohydraulischen oder elektropneumatischen Bremsanlage auch dann gegeben, wenn keine Druckaufbau- oder Druckabbauansteuerung vorgenommen wird. Ist daher das Einlassventil oder das Auslassventil oder beide Regelventile geschlossen, und liegt ein geringer Druckgradient oder Druckhalten vor, so ist eine Druckänderung durch Ventilbetätigung nicht mehr zu erwarten. Eine andere Möglichkeit der Erkennung eines stationären Bremsvorgangs ergibt sich aus der Auswertung des Fahrerbremswunsch, wobei ein stationärer Bremsvorgang bei nicht aktiven Zusatzfunktionen dann vorliegt, wenn der Fahrerwunsch einen vorgegebenen Toleranzbereich nicht verlässt.

Ein trotz des erkannten stationären Bremsvorgangs auftretender größerer Gradient legt den Verdacht auf Druckschwingungen infolge schadhafter Bremsscheiben nahe. Erkannt wird daher eine schadhafte Bremsscheibe dann, wenn im stationären Bremsvorgang der Druckgradient einen vorgegebenen Wert überschreitet (der so gewählt ist, dass Ventilleckagen oder Messrauschen berücksichtigt sind). Tritt ein solcher nicht erwarteter Gradient mehrfach auf, so wird auf eine schadhafte Bremsscheibe an dem betrachteten Rad erkannt.

Entsprechendes gilt auch bei der Sensierung der Bremskraft anstelle des Bremsdrucks. Im Ausführungsbeispiel einer Radbremse mit elektromotorischer Zuspannung erfolgt die Erkennung schadhafter Bremsscheiben im Zustand des nicht angesteuerten Stellers, welcher dem Zustand einer stationären Bremsung entspricht. Auch hier wird dann aufgrund des Gradienten des Bremskraftsignals erkannt, ob eine schadhafte Bremsscheibe an der Radbremse vorliegt.

Ist an wenigstens einem Rad eine schadhafte Bremsscheibe erkannt, wird die oben im Stand der Technik beschriebene Kennlinienadaption für dieses Rad nur noch bei Fahrzeugstillstand durchgeführt. Wird mehrfach eine schadhafte Bremsscheibe erkannt, so wird die beschriebene Adaption bei Fahrt dauerhaft gesperrt, bei einmalig auftretenden Schwingungen nur während der auftretenden Schwingung. Im bevorzugten Ausführungsbeispiel wird diese dauerhafte Sperrung bei Systemabschaltung wieder gelöscht, um nach Auswechseln der Bremsscheibe die volle Verfügbarkeit der Adaption zu erhalten.

In einem anderen vorteilhaften Ausführungsbeispiel wird anstelle der beschriebenen Maßnahme oder ergänzend dazu ein Diagnoseeintrag über die schadhafte Bremsscheibe vorgenommen. Ferner ist ergänzend oder alternativ ein zusätzlicher Warnhinweis für den Fahrer, beispielsweise akustisch oder optisch vorgesehen und/oder eine Verkürzung der verbleibenden Fahrstrecke bzw. Fahrzeit bis zum nächsten Wartungstermin.

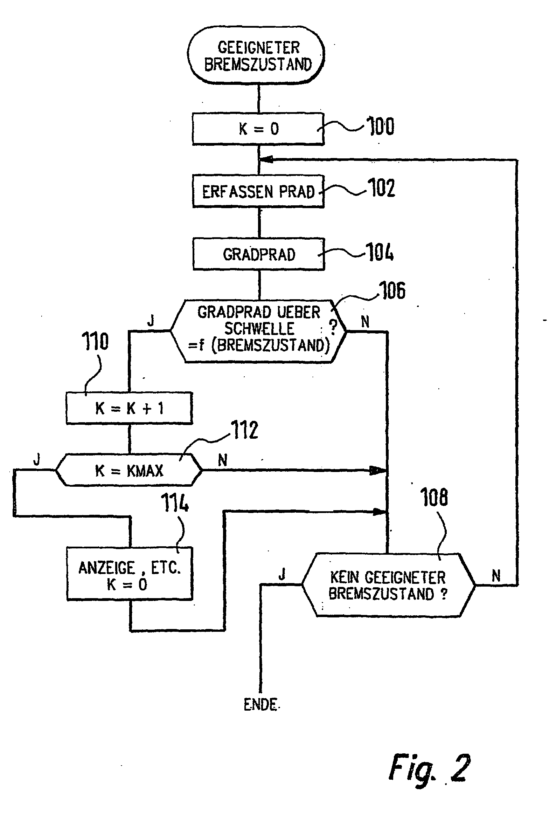

Ein bevorzugtes Ausführungsbeispiel der oben dargestellten Vorgehensweise zur Erkennung von schadhaften Bremsscheiben ist in Figur 2 anhand eines Flussdiagramms skizziert, in dem die Erkennung einer schadhaften Bremsscheibe sowohl im stationären als auch im dynamischen Bremszustand durchgeführt wird. Das Flussdiagramm repräsentiert ein Programm, welches im Mikrocomputer der Steuereinheit zur Steuerung der Radbremsen abläuft. Es existiert für jede Radbremse ein entsprechendes Programm bzw. das in Figur 2 skizzierte Programm wird für jede Radbremse durchlaufen.

Das in Figur 2 skizzierte Programm wird aufgerufen, wenn ein stationärer Bremszustand oder ein Bremszustand mit langsamen Druck- bzw. Kraftaufbau oder -abbau, der für die Erkennung schadhafter Bremsscheiben geeignet ist, erkannt wird.

Ein stationärer Bremszustand wird dann erkannt, wenn nach einer Bremsdruck- bzw. Bremskraftänderung mit einem großen Gradienten eine vorgegebene Verriegelungszeit abgelaufen ist. In anderen Ausführungsbeispielen werden andere Erkennungsmaßnahmen zum Erkennen eines stationären Bremszustandes durchgeführt. Beispielsweise wird ein stationärer Bremszustand dann erkannt, wenn der Bremsdruck an einer der Radbremsen (mit nicht defekter Bremsschiebe) oder der Bremswunsch des Fahrers bzw. der Sollwert ein vorgegebenes Toleranzband nicht verlässt. Eine andere Methode zur Erkennung eines stationären Bremszustandes liegt darin, die Ansteuerung der Stelleinrichtungen zu untersuchen. Sind die Ventile bei einer elektrohydraulischen oder elektropneumatischen Bremsanlage derart angesteuert, dass ein Druckhalten oder eine Verstellung nur mit einem sehr kleinen Druckgradienten eingestellt ist, bei einer elektromotorischen Bremsanlage kein oder nur ein geringes Ansteuersignal an die Stelleinrichtung ausgegeben wird trotz betätigtem Bremspedal, so wird von einem stationären Bremszustand ausgegangen.

Ein geeigneter dynamischen Bremszustand liegt im Komfortbremsbereich, d.h. im Bereich mit langsamem Druck- oder Kraftaufbau bzw. - abbau, vor. Ein langsamer Aufbau z.B. wird erkannt, wenn der Sollwertgradient (Solldruck, Sollkraft, Sollmoment, etc.) einen vorgegebenen Schwellenwert nicht überschreitet und die Stelleinrichtung zum Aufbau angesteuert wird (z.B. Einlassventil offen, Auslassventil geschlossen) . In diesem Fall wird der Istwertgradient (z.B. Istdruck) auf einen negativen Schwellenwert überwacht. Überschreitet der Istgradient den Schwellenwert mehrmals in einer Aufbauphase, so wird eine schadhafte Bremsscheibe erkannt. Überschreitet der Sollwertgradient den Grenzwert (z.B. bei Notbremsungen), wird die Erkennung nicht durchgeführt, da in diesem Fall zumindest bei hydraulischen Anlage durch große Ventilöffnungen Druckschwingungen in der Leitung mit großen negativen Gradienten auch ohne schadhafte Bremsscheibe auftreten können. Wird ein solcher schneller Aufbau erkannt, wird eine Durchführung der Erkennung erst nach einer vorgegebenen Verriegelungszeit erlaubt.

Bei einem langsamen Abbau (Erkennung entsprechend bei Unterschreiten eines zulässigen Abbaugradienten und bei Abbauansteuerung z.B. öffnen Ablassventil, Schließen Einlassventil) wird der Istwert auf einen positiven Grenzwert überwacht und eine schadhafte Bremsscheibe erkennt, wenn dieser Grenzwert mehrmals überschritten wird.

Ein Bremszustand mit langsamem Druckaufbau bzw. Druckabbau, der für die Erkennung schadhafter Bremsscheiben geeignet ist, wird also erkannt, wenn der Gradient des Bremswunschwertes einen vorgegebenen Grenzwert nicht überschreitet. Ergänzend wird in einem Ausführungsbeispiel ein langsamer Bremsdruckaufbau nur dann angenommen, wenn die Ansteuerung der Stelleinrichtung druckaufbauend ist (d.h. z.B. offenes. Einlassventil, geschlossenes Auslassventil). Wurde der Grenzwert überschritten, so wird die Erkennung erst dann durchgeführt, wenn nach Unterschreiten des Grenzwerts eine vorgegebene Verriegelungszeit abgelaufen ist.

Ist einer der vorstehend beschriebene Bremszustände erkannt, wird im ersten Schritt 100 wird ein Zähler K auf den Wert 0 gesetzt. Daraufhin wird im Schritt 102 der Raddruck PRAD bzw. die Radbremskraft erfasst und im Schritt 104 beispielsweise durch zeitliche Ableitung der Gradient des Bremsdrucks bzw. der Bremskraft ermittelt.

Im darauffolgenden Schritt 106 wird der Betrag des Gradienten im stationären Bremszustand mit einem vorgegebenen Grenzwert GRAD0 verglichen, im Bremszustand mit langsamem Druckaufbau mit einem negativen Grenzwert GRAD1, im Bremszustand mit langsamem Druckabbau mit einem positiven Grenzwert GRAD2. Übersteigt der Gradienten den im aktuellen Bremszustand vorgesehenen Grenzwert nicht, so wird im Schritt 108 durch Überprüfen des Bremsdrucks, der Ventil- bzw. Stelleransteuerung und/oder des Sollwertes (Bremswunsch) ermittelt, ob einer der genannten Bremszustände noch vorliegt. Ist dies der Fall, wird das Programm mit Schritt 102 wiederholt, andernfalls beendet, bis das Auftreten des nächsten geeigneten Bremszustandes erkannt wurde.

Hat Schritt 106 ergeben, dass der Gradienten den vorgesehenen Grenzwert überschreitet, wird im Schritt 110 der Zähler K um 1 erhöht. Daraufhin wird im Schritt 112 überprüft, ob der Zählerstand K seinen Maximalwert KMAX erreicht hat. Ist dies nicht der Fall, folgt Schritt 108. Im Falle einer Ja-Antwort folgt Schritt 114, worin die Erkennung einer schadhaften Bremsscheibe dem Fahrer beispielsweise mittels einer Warnlampe angezeigt wird und/oder ein Diagnoseeintrag vorgenommen wird und/oder die Kennlinienadaption des Bremsdruckreglers gesperrt wird und/oder eine Verkürzung des Inspektionsintervalls vorgenommen wird und/oder die Verfügbarkeit des Fahrzeugs beispielsweise durch eine Geschwindigkeitsbegrenzung eingeschränkt wird. Ferner der Zähler K wieder zurückgesetzt. Nach Schritt 114 folgt Schritt 108.

Die Bestimmung der Druck- bzw. Bremskraftschwingung im Schritt 106 ist beispielhaft. In anderen Ausführungsbeispielen erfolgt eine Schwingungserkennung bei einem stationären Bremszustand dergestalt, dass eine Änderung des Vorzeichens des Gradienten innerhalb einer bestimmten Zeit ermittelt wird. Tritt diese Änderung des Vorzeichens mehrmals während eines stationären Bremszustandes auf, wird von einer schadhaften Bremsscheibe ausgegangen. Besonders vorteilhaft ist, wenn bei der Bestimmung von Druck- bzw. Bremskraftschwingungen im stationären Bremszustand die Radgeschwindigkeit mitberücksichtigt wird, da bei einer schadhaften Bremsscheibe die Periodizität der Schwingung radgeschwindigkeitsabhängig ist. Beispielsweise wird bei der oben skizzierten Schwingungserkennung die Zeitbedingung, innerhalb derer ein Vorzeichenwechsel des Gradienten stattzufinden hat, radgeschwindigkeitsabhängig vorgegeben.

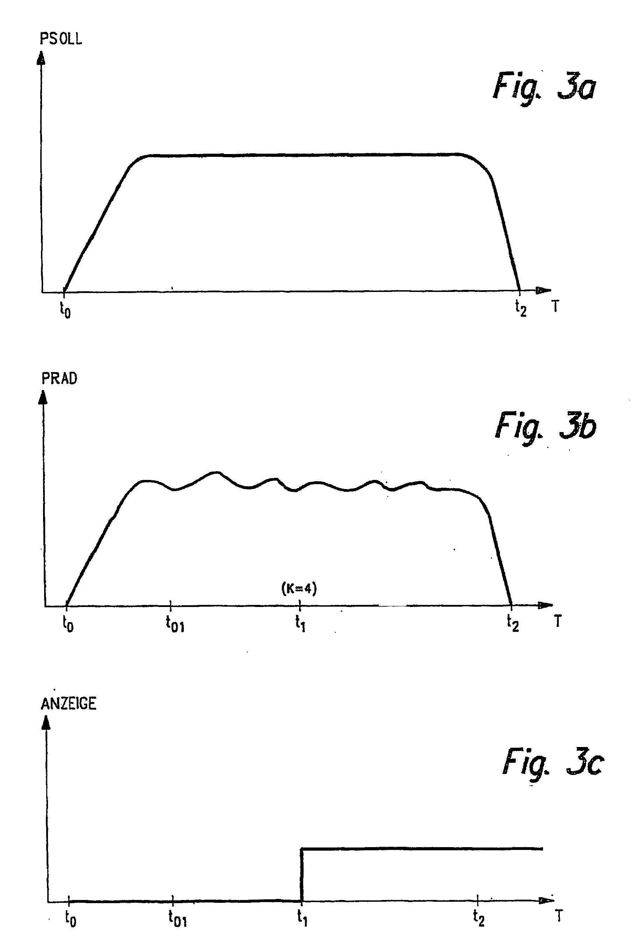

In Figur 3 ist die beschriebene Vorgehensweise anhand von Zeitdiagrammen skizziert. Dabei zeigt Figur 3a den zeitlichen Verlauf des Solldrucks, d. h. der Fahrervorgabe, Figur 3b den zeitlichen Verlauf des Raddrucks PRAD und Figur 3c den zeitlichen Verlauf eines eine Warnlampe für den Fahrer ansteuernden Anzeigesignals. Zum Zeitpunkt t0 beginnt der Fahrer mit Betätigen des Bremspedals einen Bremsvorgang. Entsprechend zeigt ab dem Zeitpunkt t0 der Radbremsdruck einen steilen Gradienten des Druckaufbaus. Nach Ablauf einer vorbestimmten Verriegelungszeit zum Zeitpunkt t01 beginnt das oben dargestellte Verfahren zur Erkennung einer schadhaften Bremsscheibe. Wie anhand Figur 3b dargestellt, zeigt der Bremsdruck im stationären Bremszustand ein schwingendes Verhalten. Entsprechend wird zwischen den Zeitpunkten t01 und t1 der Gradient des Bremsdrucksignals ausgewertet. Im vorliegenden Fall überschreitet er insgesamt viermal den vorgegebenen Schwellenwert, so dass, vorausgesetzt der Maximalwert für den Zähler K ist 4, zum Zeitpunkt t1 eine schadhafte Bremsscheibe erkannt wurde. Entsprechend wird zum Zeitpunkt t1 das Anzeigesignal geschaltet. Zum Zeitpunkt t2 wird der Bremsvorgang vom Fahrer durch Lösen des Bremspedals beendet.

In einem bevorzugten Ausführungsbeispiel werden die genannten Bremszustände gemeinsam betrachtet, d.h. der Wert des Zählers K wird erst dann zurückgesetzt, wenn erstmalig einer der obengenannten Bremszustände verlassen wurde. In anderen Ausführungen werden die einzelnen Bremszustände getrennt betrachtet, d.h. der Zähler K wird auf Null gesetzt, wenn der aktuelle Bremszustand verlassen wurde.

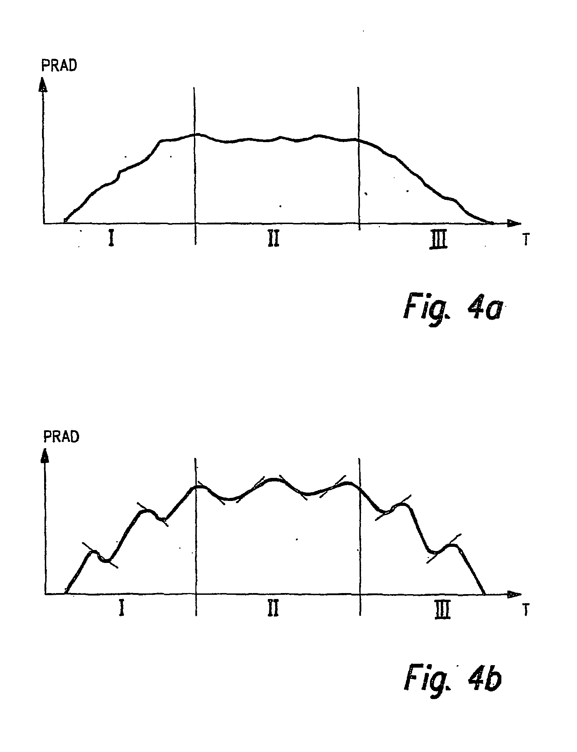

Figur 4a zeigt den zeitlichen Verlauf des Radbremsdrucks PRAD bei funktionsfähiger Bremsscheibe, Figur 4b bei schadhafter Scheibe. Die Phase I stellt den Zustand des langsamen Druckaufbaus dar. Es zeigt sich in Figur 4b, dass 2 mal der Grenzwert überschritten ist. In der Phase II des stationären Bremszustandes erfolgt insgesamt viermal eine Überschreitung (vgl. Figur 4b), während in der Phase III des langsamen Druckabbaus eine zweimalige Überschreitung des Grenzwerts stattfindet. Insgesamt wird also bei einem Verlauf gemäß Figur 4b eine schadhafte Bremsscheibe erkannt, während in Figur 4a infolge der fehlenden Grenzwertüberschreitungen keine schadhafte Bremsscheibe vorliegt.

## Patentansprüche

1. Verfahren zum Erkennen einer schadhaften Bremsscheibe, wobei
- eine die an dem Rad wirkende Bremskraft und/oder den Bremsdruck repräsentierende Größe erfasst wird,
- in wenigstens einem geeigneten Bremszustand ermittelt wird, ob ein schwingendes Verhalten des Bremsdruck- und/oder Bremskraftsignals vorliegt und
- ein Signal für eine schadhafte Bremsscheibe einer Radbremse erzeugt wird, wenn ein solches Verhalten ermittelt wird
**dadurch gekennzeichnet, dass**
ein geeigneter Bremszustand dann vorliegt,
- wenn nach Überschreiten eines vorgegebenen Gradienten durch den Bremsdruck und/oder die Bremskraft eine vorgegebene Zeit abgelaufen ist und/oder
- wenn ein Bremsdruck- und/oder Bremskraftsignal eines Rades und/oder der Bremswunsch bzw. Sollwert innerhalb eines vorgegebenen Toleranzbandes oder wenn die Ansteuerung der Stelleinrichtung der Radbremse keine oder nur eine geringe Bremskraft- oder Bremsdruckänderung erwarten lässt und/oder
- wenn ein Bremszustand mit langsamem Aufbau vorliegt, beidem der Gradient des Sollwerts einen vorgegebenen Grenzwert nicht überschreitet und wenn ggf. nach Überschreiten den Grenzwerts eine Verriegelungszeit abgelaufen ist und/oder
- wenn ein Bremszustand mit langsamem Abbau vorliegt, bei dem der Gradient des Sollwerts einen vorgegebenen Grenzwert nicht überschreitet und wenn ggf. nach Überschreiten den Grenzwerts eine Verriegelungszeit abgelaufen ist.

2. Verfahren nach Anspruch 1, **dadurch gekennzeichnet, dass** der wenigstens eine geeignete Bremszustand
- ein stationärer Bremszustand, oder
- ein Bremszustand mit langsamem
- Kraftaufbau oder
- Kraftabbau
ist.

3. Verfahren nach einem der vorhergehenden Ansprüche, **dadurch gekennzeichnet, dass** das schwingende Verhalten anhand des zeitlichen Verlaufs des Bremsdruck- und/oder Bremskraftsignals ermittelt wird.

4. Verfahren nach einem der vorhergehenden Ansprüche, **dadurch gekennzeichnet, dass** das schwingende Verhalten dann erkannt wird, wenn der Gradient des Bremsdrucks bzw. der Bremskraft vorzugsweise mehrmals einen vorgegebenen Schwellenwert überschreitet.

5. Verfahren nach einem der Ansprüche 1 bis 3, **dadurch gekennzeichnet, dass** das schwingende Verhalten dann erkannt wird, wenn innerhalb einer vorgegebenen, vorzugsweise radgeschwindigkeitsabhängigen Zeit wenigstens ein Vorzeichenwechsel des Gradienten des Bremsdruck- und/oder Bremskraftsignals auftritt.

6. Verfahren nach einem der vorhergehenden Ansprüche, **dadurch gekennzeichnet, dass** das schwingende Verhalten dann erkannt wird, wenn im Bremszustand mit langsamem Aufbau der Gradient des Bremsdruck- und/oder Bremskraftsignals mehrmals einen negativen Grenzwert überschreitet bzw. im Bremszustand mit langsamem Abbau der Gradient des Bremsdruck- und/oder Bremskraftsignals mehrmals einen positiven Grenzwert überschreitet.

7. Verfahren nach wenigstens Anspruch 2, **dadurch gekennzeichnet, dass** der stationäre Bremszustand dadurch erkannt wird, dass kein aufbauendes oder abbauendes Ansteuersignal für die Stelleinrichtung der Radbremse erzeugt wird.

8. Verfahren nach einem der vorhergehenden Ansprüche, **dadurch gekennzeichnet, dass** bei erkannter schadhafter Bremsscheibe eine Warnlampe angesteuert wird, ein Diagnoseeintrag erfolgt, eine Verkürzung der verbleibenden Fahrstrecke bzw. Fahrzeit bis zum nächsten Wartungstermin und/oder eine Verfügungseinschränkung des Fahrzeugs und/oder ein Verbot einer Kennlinienadaption im Bremsdruckregler stattfindet.

9. Verfahren nach einem der vorhergehenden Ansprüche, **dadurch gekennzeichnet, dass** die Radbremse im Rahmen einer elektrohydraulischen oder elektropneumatischen Bremsanlage eingesetzt ist oder einen elektromotorische Stelleinrichtung aufweist.

10. Vorrichtung zum Erkennen einer schadhaften Bremsscheibe, mit einer Steuereinheit, welche wenigstens eine den Bremsdruck und/oder die Bremskraft repräsentierende Größe ermittelt, wobei die Steuereinheit ein eine schadhafte Bremsscheibe anzeigendes Signal erzeugt, wenn bei wenigstens einem geeigneten Bremszustand ein schwingendes Verhalten des Bremsdruck- und/oder Bremskraftsignals erkannt wurde, **dadurch gekennzeichnet, dass**
ein geeigneter Bremszustand dann vorliegt,
- wenn nach Überschreiten eines vorgegebenen Gradienten durch den Bremsdruck und/oder die Bremskraft eine vorgegebene Zeit abgelaufen ist und/oder
- wenn ein Bremsdruck- und/oder Bremskraftsignal eines Rades und/oder der Bremswunsch bzw. Sollwert innerhalb eines vorgegebenen Toleranzbandes oder wenn die Ansteuerung der Stelleinrichtung der Radbremse keine oder nur eine geringe Bremskraft- oder Bremsdruckänderung erwarten lässt und/oder
- wenn ein Bremszustand mit langsamem Aufbau vorliegt, bei dem der Gradient des Sollwerts einen vorgegebenen Grenzwert nicht überschreitet und wenn ggf. nach Überschreiten den Grenzwerts eine Verriegelungszeit abgelaufen ist und/oder
- wenn ein Bremszustand mit langsamem Abbau vorliegt, bei dem der Gradient des Sollwerts einen vorgegebenen Grenzwert nicht überschreitet und wenn ggf. nach Überschreiten den Grenzwerts eine Verriegelungszeit abgelaufen ist.

11. Vorrichtung zur Steuerung einer Radbremse, bei welcher abhängig von einem Fahrerbremswunsch der Bremsdruck und/oder die Bremskraft an der Radbremse durch elektrische Betätigung wenigstens einer Stelleinrichtung eingestellt wird, **dadurch gekennzeichnet, dass** bei Erkennen einer schadhaften Bremsscheibe mit einer Vorrichtung nach Anspruch 10, ein Signal erzeugt wird, welches zu einem eingeschränkten Betrieb der Radbremssteuerung führt.

12. Vorrichtung nach Anspruch 11, **dadurch gekennzeichnet, dass** der eingeschränkte Betrieb darin besteht, dass eine Adaption einer Kennlinie zur Bildung des Ansteuersignals für die wenigstens eine Stelleinrichtung bei Erkennen einer schadhaften Bremsscheibe zumindest während des Fahrbetriebs verhindert wird.

## Claims

1. Method for detecting a defective brake disc,
- a variable which represents the braking force acting on the wheel and/or the brake pressure being sensed,
- it being determined, in at least one suitable braking state, whether an oscillatory behaviour of the brake pressure signal and/or braking force signal is present, and
- a signal for a defective brake disc of a wheel brake being generated if such a behaviour is determined,
**characterized in that**
a suitable braking state is present
- if a predefined time has expired after a predefined gradient has been exceeded by the brake pressure and/or the braking force, and/or
- if a brake pressure signal and/or braking force signal of a wheel and/or the braking request or set point value lies within a predefined tolerance band, or if the actuation of the actuator device of the wheel brake does not allow a change, or only allows a slight change, in the braking force or brake pressure, and/or
- if a braking state with a slow build up is present, during which the gradient of the set point value does not exceed a predefined limiting value, and if, if appropriate, a locking time has expired after the limiting value was exceeded, and/or
- if a braking state with a slow reduction is present, during which the gradient of the set point value does not exceed a predefined limiting value, and if, if appropriate, a locking time has expired after the limiting value was exceeded.

2. Method according to Claim 1, **characterized in that** the at least one suitable braking state
- is a steady-state braking state, or
- a braking state with slow
- build up of force or
- reduction of force.

3. Method according to one of the preceding claims, **characterized in that** the oscillatory behaviour is determined by reference to the time profile of the brake pressure signal and/or braking force signal.

4. Method according to one of the preceding claims, **characterized in that** the oscillatory behaviour is detected if the gradient of the brake pressure or the braking force exceeds a predefined threshold value, preferably repeatedly.

5. Method according to one of Claims 1 to 3, **characterized in that** the oscillatory behaviour is detected if at least one change in sign of the gradient of the brake pressure signal and/or braking force signal occurs within a predefined, preferably wheel-speed-dependent time.

6. Method according to one of the preceding claims, **characterized in that** the oscillatory behaviour is detected if, in the braking state with a slow build up, the gradient of the brake pressure signal and/or braking force signal exceeds a negative limiting value repeatedly, or in the braking state with a slow reduction, the gradient of the brake pressure signal and/or braking force signal exceeds a positive limiting value repeatedly.

7. Method according to at least Claim 2, **characterized in that** the steady-state braking state is detected by virtue of the fact that no building-up or reducing actuation signal is generated for the actuator device of the wheel brake.

8. Method according to one of the preceding claims, **characterized in that**, when a defective brake disc is detected, a warning lamp is actuated, a diagnostic entry is made, the remaining distance to be travelled or travel time to the next servicing deadline is shortened and/or an availability restriction is imposed on the vehicle and/or a prohibition to adapt a characteristic curve in the brake pressure regulator is imposed.

9. Method according to one of the preceding claims, **characterized in that** the wheel brake is used within the scope of an electrohydraulic or electropneumatic brake system, or has an electromotive actuator device.

10. Device for detecting a defective brake disc, having a control unit which determines at least one variable which represents the brake pressure and/or the braking force, the control unit generating a signal which indicates a defective brake disc if an oscillatory behaviour of the brake pressure signal and/or braking force signal has been detected in at least one suitable braking state, **characterized in that** a suitable braking state is present
- if a predefined time has expired after a predefined gradient has been exceeded by the brake pressure and/or the braking force, and/or
- if a brake pressure signal and/or braking force signal of a wheel and/or the braking request or set point value lies within a predefined tolerance band, or if the actuation of the actuator device of the wheel brake does not allow a change, or only allows a slight change, in the braking force or brake pressure, and/or
- if a braking state with a slow build up is present, during which the gradient of the set point value does not exceed a predefined limiting value, and if, if appropriate, a locking time has expired after the limiting value was exceeded, and/or
- if a braking state with a slow reduction is present, during which the gradient of the set point value does not exceed a predefined limiting value, and if, if appropriate, a locking time has expired after the limiting value was exceeded.

11. Device for controlling a wheel brake, in which the brake pressure and/or the braking force of the wheel brake is set, as a function of a driver braking request, by electrical activation of at least one actuator device, **characterized in that**, when a defective brake disc is detected using a device according to Claim 10, a signal is generated which leads to restricted operation of the wheel brake control system.

12. Device according to Claim 11, **characterized in that** the restricted operation consists in the fact that adaptation of a characteristic curve in order to form the actuation signal for the at least one actuator device is prevented when a defective brake disc is detected, at least during driving.

## Revendications

1. Procédé d'identification d'un disque de frein défectueux, selon lequel
- on détecte une force de freinage agissant sur la roue et/ou la grandeur représentant la pression de freinage ;
- on détermine au moins dans un état de freinage approprié s'il y a un comportement oscillant du signal de la pression de freinage et/ou de la force de freinage, et
- on génère un signal pour un disque de frein défectueux d'un frein de roue lorsqu'un tel comportement a été déterminé,
**caractérisé en ce qu'**
un état de freinage approprié apparaît si :
- une durée pré-déterminée s'est écoulée après dépassement d'un gradient pré-déterminé par la pression de freinage et/ou la force de freinage, et/ou
- un signal de pression de freinage et/ou de force de freinage d'une roue et/ou le souhait de freinage, respectivement la valeur de consigne, comprise à l'intérieur d'une bande de tolérance prédéterminée ou lorsque la commande du système de commande du frein de roue n'entraîne pas de modification de la pression de freinage et/ou de la force de freinage ou uniquement une faible modification, et/ou
- on a un état de freinage avec une augmentation lente, selon lequel le gradient de la valeur de consigne ne dépasse pas une valeur limite prédéterminée et le cas échéant après avoir dépassé la valeur limite, une durée de sécurité s'est écoulée, et/ou
- on a un état de freinage avec une diminution lente selon lequel le gradient de la valeur de consigne ne dépasse pas une valeur limite prédéterminée et le cas échéant après avoir dépassé la valeur limite, une durée de sécurité s'est écoulée.

2. Procédé selon la revendication 1,
**caractérisé en ce que**
l'au moins un état de freinage approprié est :
- un état de freinage stationnaire, ou
- un état de freinage avec
une augmentation de force lente ou
une diminution de force lente.

3. Procédé selon l'une des revendications précédentes,
**caractérisé en ce qu'**
on détermine le comportement oscillant en fonction de la courbe dans le temps du signal de la pression de freinage et/ou de la force de freinage.

4. Procédé selon l'une des revendications précédentes,
**caractérisé en ce que**
on identifie le comportement oscillant lorsque le gradient de la pression de freinage, respectivement de la force de freinage, dépasse de préférence plusieurs fois une valeur de seuil prédéterminée.

5. Procédé selon l'une des revendications 1 à 3,
**caractérisé en ce que**
on identifie le comportement oscillant lorsqu'à l'intérieur d'une durée prédéterminée, de préférence en fonction de la vitesse de la roue, au moins un changement de signe du gradient du signal de pression de freinage et/ou de force de freinage se produit.

6. Procédé selon l'une des revendications précédentes,
**caractérisé en ce qu'**
on identifie le comportement oscillant lorsqu'en état de freinage avec augmentation lente, le gradient du signal de pression de freinage et/ou de force de freinage dépasse plusieurs fois une valeur limite négative, ou si en état de freinage avec diminution lente, le gradient du signal de pression de freinage et/ou de force de freinage dépasse plusieurs fois une valeur limite positive.

7. Procédé selon au moins la revendication 2,
**caractérisé en ce que**
on identifie l'état de freinage stationnaire de telle sorte qu'aucun signal de commande croissant ou décroissant n'est généré pour le système de commande du frein de roue.

8. Procédé selon l'une des revendications précédentes,
**caractérisé en ce que**
lorsqu'un disque de frein défectueux est détecté, une lampe témoin s'allume, une entrée de diagnostic se produit, et entraîne un raccourcissement du trajet, respectivement de la durée de parcours, restant(e) jusqu'à la date de maintenance suivante et/ou une limitation de l'utilisation du véhicule et/ou une interdiction d'une adaptation des caractéristiques dans le régulateur de pression de freinage.

9. Procédé selon l'une des revendications précédentes,
**caractérisé en ce que**
le frein de roue est mis en oeuvre dans le cadre d'une installation de freinage électrohydraulique ou électropneumatique ou présente un système de commande électromoteur.

10. Dispositif d'identification d'un disque de frein défectueux, comprenant une unité de commande qui détermine au moins une grandeur représentant la pression de freinage et/ou la force de freinage,
dans lequel l'unité de commande génère un signal indiquant un disque de frein défectueux lorsqu'un comportement oscillant du signal de pression de freinage et/ou de force de freinage est identifié dans au moins un état de freinage approprié,
**caractérisé en ce qu'**
un état de freinage approprié apparaît si :
- une durée prédéterminée s'est écoulée après dépassement d'un gradient prédéterminé par la pression de freinage et/ou la force de freinage et/ou
- un signal de pression et/ou de force de freinage d'une roue et/ou le souhait de freinage, respectivement la valeur de consigne, à l'intérieur d'une bande de tolérance pré-déterminée ou lorsque la commande du système de commande du frein de roue n'entraîne pas de modification de la pression de freinage et/ou de la force de freinage ou uniquement une faible modification et/ou
- on a état de freinage avec augmentation lente, selon lequel le gradient de la valeur de consigne ne dépasse pas une valeur limite pré-déterminée et le cas échéant, après avoir dépassé la valeur limite, une durée de sécurité s'est écoulée, et/ou
- on a un état de freinage avec une diminution lente selon lequel le gradient de la valeur de consigne ne dépasse pas une valeur limite prédéterminée et le cas échéant après avoir dépassé la valeur limite, une durée de sécurité s'est écoulée.

11. Dispositif pour commander un frein de roue,
dans lequel, en fonction d'un souhait de freinage émis par le conducteur, la pression de freinage et/ou la force de freinage sur le frein de roue est commandée par un actionnement électrique d'au moins un système de commande,
**caractérisé en ce que**
lors de l'identification d'un disque de frein défectueux avec un dispositif selon la revendication 10, un signal est généré et conduit à un fonctionnement restreint de la commande du frein de roue.

12. Dispositif selon la revendication 11,
**caractérisé en ce que**
le fonctionnement restreint consiste à empêcher toute adaptation d'une caractéristique de formation du signal de commande pour l'au moins un système de commande, lors de l'identification d'un disque de frein défectueux au moins pendant le fonctionnement du véhicule.
